# EUROPÄISCHE PATENTANMELDUNG

(11) **EP 4 685 592 A1**
(43) Veröffentlichungstag der Anmeldung: **28.01.2026**
(21) Anmeldenummer: 24190299.8
(22) Anmeldetag: 23.07.2024
(51) Int. Cl.: G05B 19/418, G05B 19/042

(54) **EFFIZIENTES ANSTEUERN VON ENDGERÄTEN INNERHALB EINES SICHERHEITSKRITISCHEN PRODUKTIONSPROZESSES**

(71) Anmelder: Vogt, Andreas, 33142 Büren (DE)
(72) Erfinder: Vogt, Andreas, 33142 Büren (DE)
(74) Vertreter: Reich, Jochen

(57) **Zusammenfassung**

Die vorliegende Erfindung beschreibt ein Verfahren und eine Systemanordnung zur effizienten Steuerung und Überwachung von Endgeräten innerhalb sicherheitskritischer Produktionsprozesse. Ziel dieser Innovation ist es, die Effizienz, Sicherheit und Zuverlässigkeit dieser Prozesse erheblich zu verbessern. Eine verwendete Kommunikationsinfrastruktur zeichnet sich dadurch aus, dass sie Hochfrequenzsignale über Niederspannungs-Stromleitungen moduliert. Diese Methode ermöglicht eine kostengünstige und einfache Nutzung bestehender Stromleitungen zur Datenübertragung. Innerhalb des Produktionsprozesses werden Sensoren basierend auf einem voreingestellten Produktionsschema ausgewählt und nur die relevanten Sensoren ausgelesen. Diese Sensoren überwachen verschiedene Parameter der Produktionsmittel. Die Daten der ausgewählten Sensoren werden mittels mindestens einer Steuereinheit, die ebenfalls in der zweiten Kommunikationsinfrastruktur angeordnet ist, erfasst und verarbeitet. Ein weiterer Aspekt der Erfindung ist, dass die Steuereinheiten mit nicht überschreibbaren Kennungen ausgestattet sind. Diese Maßnahme gewährleistet die Authentizität und Integrität der Steuereinheiten und schützt vor unbefugtem Zugriff und Manipulation. Durch die Integration von Verschlüsselungsmechanismen in die Modulation der Signale wird die Sicherheit der Datenübertragung zusätzlich erhöht. Durch die beschriebene Systemanordnung wird eine flexible und anpassungsfähige Infrastruktur geschaffen, die eine hohe Ausfallsicherheit und Effizienz bietet. Die direkte und kontinuierliche Überwachung der Produktionsparameter ermöglicht eine sofortige Reaktion auf Veränderungen und potenzielle Probleme, was die Prozesssicherheit und Produktqualität steigert. Insgesamt bietet die Erfindung eine robuste, sichere und kosteneffiziente Lösung für die Steuerung und Überwachung sicherheitskritischer Produktionsprozesse und erfüllt somit die komplexen Anforderungen moderner Produktionsumgebungen. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

## Beschreibung

Die vorliegende Erfindung beschreibt ein Verfahren und eine Systemanordnung zur effizienten Steuerung und Überwachung von Endgeräten innerhalb sicherheitskritischer Produktionsprozesse. Ziel dieser Innovation ist es, die Effizienz, Sicherheit und Zuverlässigkeit dieser Prozesse erheblich zu verbessern. Eine verwendete Kommunikationsinfrastruktur zeichnet sich dadurch aus, dass sie Hochfrequenzsignale über Niederspannungs-Stromleitungen moduliert. Diese Methode ermöglicht eine kostengünstige und einfache Nutzung bestehender Stromleitungen zur Datenübertragung. Innerhalb des Produktionsprozesses werden Sensoren basierend auf einem voreingestellten Produktionsschema ausgewählt und nur die relevanten Sensoren ausgelesen. Diese Sensoren überwachen verschiedene Parameter der Produktionsmittel. Die Daten der ausgewählten Sensoren werden mittels mindestens einer Steuereinheit, die ebenfalls in der zweiten Kommunikationsinfrastruktur angeordnet ist, erfasst und verarbeitet. Ein weiterer Aspekt der Erfindung ist, dass die Steuereinheiten mit nicht überschreibbaren Kennungen ausgestattet sind. Diese Maßnahme gewährleistet die Authentizität und Integrität der Steuereinheiten und schützt vor unbefugtem Zugriff und Manipulation. Durch die Integration von Verschlüsselungsmechanismen in die Modulation der Signale wird die Sicherheit der Datenübertragung zusätzlich erhöht. Durch die beschriebene Systemanordnung wird eine flexible und anpassungsfähige Infrastruktur geschaffen, die eine hohe Ausfallsicherheit und Effizienz bietet. Die direkte und kontinuierliche Überwachung der Produktionsparameter ermöglicht eine sofortige Reaktion auf Veränderungen und potenzielle Probleme, was die Prozesssicherheit und Produktqualität steigert. Insgesamt bietet die Erfindung eine robuste, sichere und kosteneffiziente Lösung für die Steuerung und Überwachung sicherheitskritischer Produktionsprozesse und erfüllt somit die komplexen Anforderungen moderner Produktionsumgebungen. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

Der Stand der Technik in der Steuerung und Überwachung von sicherheitskritischen Produktionsprozessen basiert auf einer Kombination aus unterschiedlichen Kommunikationsinfrastrukturen und umfangreichen Verkabelungssystemen. In traditionellen Systemen erfolgt die Datenübertragung von Sensoren zu zentralen Steuereinheiten meist über dedizierte Kommunikationsleitungen. Diese Steuereinheiten verarbeiten die gesammelten Sensordaten und steuern entsprechend die Produktionsmittel.

Ein wesentliches Merkmal des Stands der Technik ist die starke Abhängigkeit von physischen Kabelverbindungen für die Datenkommunikation. Die Kommunikationsleitungen sind oft spezifisch für die jeweilige Anwendung konzipiert und verlegt, was die Flexibilität und Anpassungsfähigkeit der Produktionsprozesse einschränkt. Die Installation und Wartung dieser Kabelinfrastruktur ist kostenintensiv und zeitaufwendig. Zusätzlich erhöht die Komplexität der Verkabelung das Risiko von Verkabelungsfehlern und daraus resultierenden Systemausfällen. Die Notwendigkeit, separate Kommunikationsleitungen zu verlegen, erhöht somit das Risiko von Verkabelungsfehlern und Ausfällen, was zu unerwarteten Produktionsunterbrechungen führen kann.

In typischen Produktionsprozessen werden die Sensordaten zentral verarbeitet. Dies bedeutet, dass die Daten von den Sensoren zu einer zentralen Steuereinheit übertragen werden müssen, die dann die notwendigen Entscheidungen trifft und Steuerungsbefehle an die Produktionsmittel zurücksendet. Diese zentrale Datenverarbeitung kann zu Verzögerungen führen, da die Datenübertragung und -verarbeitung in mehreren Schritten erfolgt. Diese Verzögerungen können besonders kritisch sein, wenn schnelle Reaktionen auf sich ändernde Produktionsbedingungen erforderlich sind.

Ein weiteres Problem des aktuellen Stands der Technik ist die begrenzte Redundanz in den Kommunikationssystemen. Fällt eine Kommunikationsverbindung aus, kann dies zu erheblichen Störungen im Produktionsprozess führen, da alternative Kommunikationswege oft nicht vorhanden sind oder nicht schnell genug aktiviert werden können.

Sicherheitsaspekte stellen eine zusätzliche Herausforderung dar. Die Datenübertragung in traditionellen Systemen ist oft nicht ausreichend gegen unbefugten Zugriff und Manipulation geschützt. Dies ist besonders problematisch in sicherheitskritischen Umgebungen, wo die Integrität und Vertraulichkeit der Daten von höchster Bedeutung sind.

Zusammenfassend lässt sich sagen, dass der derzeitige Stand der Technik durch eine starke Abhängigkeit von physischer Verkabelung, zentrale Datenverarbeitung, begrenzte Redundanz und unzureichende Sicherheitsmechanismen gekennzeichnet ist. Diese Merkmale führen zu hohen Installations- und Wartungskosten, eingeschränkter Flexibilität, potenziellen Verzögerungen bei der Datenverarbeitung und erhöhtem Risiko für Systemausfälle und Sicherheitsverletzungen. Die vorliegende Erfindung zielt darauf ab, diese Schwächen zu überwinden und eine effizientere, sicherere und flexiblere Lösung für die Steuerung und Überwachung von sicherheitskritischen Produktionsprozessen bereitzustellen.

Die traditionelle Infrastruktur bietet oft keine ausreichende Sicherheit gegen unbefugten Zugriff und Manipulation der Daten. Dies ist besonders in sicherheitskritischen Umgebungen ein erhebliches Risiko, da der Verlust der Datenintegrität zu schwerwiegenden Konsequenzen führen kann.

Es ist daher eine Aufgabe ein Verfahren vorzuschlagen, welches Effizienz, Sicherheit und Zuverlässigkeit der Steuerung und Überwachung von Produktionsprozessen in sicherheitskritischen Umgebungen verbessert. Ferner ist es eine Aufgabe der vorliegenden Erfindung eine entsprechend eingerichtete Systemanordnung vorzuschlagen. Ferner ist es eine Aufgabe ein Computerprogrammprodukt mit Steuerbefehlen bereitzustellen, welche das Verfahren implementieren beziehungsweise die vorgeschlagene Anordnung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein zum effizienten Ansteuern von Endgeräten innerhalb eines sicherheitskritischen Produktionsprozesses vorgeschlagen, aufweisend ein Betreiben einer ersten Kommunikationsinfrastruktur und einer zweiten Kommunikationsinfrastruktur, wobei die zweite Kommunikationsinfrastruktur mindestens einen Kommunikationspfad mittels eines Modulierens von Hochfrequenzsignalen über eine Niederspannungs-Stromleitungen betreibt; ein Auswählen von Sensoren aus einer Menge von Sensoren innerhalb des Produktionsprozesses in Abhängigkeit eines voreingestellten Produktionsschemas, wobei die Sensoren in der zweiten Kommunikationsinfrastruktur angeordnet sind; ein Auslesen nur der ausgewählten Sensoren mittels mindestens einer Steuereinheit, welche ebenfalls in der zweiten Kommunikationsinfrastruktur angeordnet ist; und ein Ansteuern von Produktionsmitteln innerhalb des Produktionsprozesses durch die mindestens ein Steuereinheit in Abhängigkeit ausgelesener Sensordaten und des voreingestellten Produktionsschemas.

Ein effizientes Ansteuern von Endgeräten innerhalb eines sicherheitskritischen Produktionsprozesses wird erfindungsgemäß dadurch bewerkstelligt, dass nur die tatsächlich benötigten Sensoren abgefragt werden und nicht wie im Stand der Technik alle Sensoren. Die Sensoren können je nach Szenario, also je nach Produktionsschema, abgefragt werden. Das Produktionsschema kann sich je Verfahrensausführung ändern und somit werden in jedem Arbeitsgang potentiell unterschiedliche Sensoren ausgelesen. Somit wird der Nachteil aus dem Stand der Technik überwunden, dass Sensoren permanent ausgelesen werden, was zu unnötiger Datenflut führt. Zudem wird ein effizientes Stromnetz zur Datenkommunikation verwendet, welches die erste Kommunikationsinfrastruktur nicht beeinträchtigt.

Ein Betreiben einer ersten Kommunikationsinfrastruktur und einer zweiten Kommunikationsinfrastruktur erfolgt derart, dass neben einer bestehenden ersten Kommunikationsinfrastruktur eine weitere sogenannte Schatten IT aufgebaut wird. Somit wird das bestehende Netzwerk bzw. die erste Kommunikationsinfrastruktur nicht beeinträchtigt. Die herkömmliche in einer Produktionsanlage bestehende Struktur wird nicht überlastet und es entsteht eine unabhängige und gesondert abgesicherte zweite Kommunikationsinfrastruktur. Dies verhindert es, dass sensible Sensordaten verfälscht werden, was wiederum klare und vertrauenswürde Kennzahlen der Produktion schafft.

Die vorliegende Erfindung bringt eine Reihe technischer Vorteile mit sich, die die Effizienz und Sicherheit in Produktionsprozessen erheblich verbessern. Dieses Verfahren nutzt eine duale Kommunikationsinfrastruktur, bestehend aus einer ersten und einer zweiten Kommunikationsinfrastruktur. Die zweite Kommunikationsinfrastruktur zeichnet sich dabei durch die Modulation von Hochfrequenzsignalen über Niederspannungs-Stromleitungen aus, was technische Vorteile bietet.

Einer der Vorteile dieser dualen Infrastruktur ist die erhöhte Ausfallsicherheit. Sollte eine der beiden Infrastrukturen ausfallen, kann die andere weiterhin den Betrieb aufrechterhalten, was die Kontinuität des Produktionsprozesses gewährleistet. Darüber hinaus optimiert die Nutzung der zweiten Kommunikationsinfrastruktur, die bestehende Stromleitungen für die Datenübertragung nutzt, die Ressourcennutzung erheblich. Dies führt zu einer Reduzierung der Notwendigkeit zusätzlicher Verkabelung und somit zu einer Senkung der Infrastrukturkosten. Die Installation und Wartung wird durch die Nutzung bestehender Stromnetze vereinfacht, da keine zusätzlichen Leitungen verlegt werden müssen.

Die zweite Kommunikationsinfrastruktur hat mindestens einen Kommunikationspfad, der mittels eines Modulierens von Hochfrequenzsignalen über eine Niederspannungs-Stromleitung betrieben wird. Somit lässt sich das Stromnetz mit geringem Aufwand erweitern zudem können ggf. weitere Kommunikationsstrecken mit anderen Netzwerktechniken betrieben werden. Es wird erfindungsgemäß also mindestens ein Teil des Kommunikationspfads der zweiten Kommunikationsinfrastruktur über das Stromnetz abgewickelt. Erfindungsgemäß wurde erkannt, dass dies gerade in einer Produktionsanlage vorteilhaft ist, da hier ansonsten umfangreiche Verkabelungen oder die Verwendung von manipulierbaren Luftschnittstellen notwendig wäre. Das Stromnetz ist hingegen bzgl. der Netzwerkparameter stabil, was in der Produktion gerade in Echtzeit vorteilhaft ist.

Das Auswählen von Sensoren aus einer Menge von Sensoren innerhalb des Produktionsprozesses erfolgt je nach zu überwachender Funktion bzw. den je einzustellenden Produktionsprozess. So können in dem Produktionsschemata unterschiedliche Mengen von Sensoren hinterlegt sein, wobei je Verfahrensdurchlauf ein Produktionsschema bereitgestellt wird. Somit können die Produktionsmittel, zum Beispiel Maschinen, entsprechend eingestellt werden. Soll ein erster Produktionsprozess überwacht und eingestellt werden, so wird ein erstes Produktionsschema bereitgestellt, welches Sensoren definiert und es wird definiert, wie die Produktionsmittel in Reaktion, also in Abhängigkeit der Sensorparameter eingestellt werden. Somit werden also Produktionsmittelparameter bereitgestellt. Soll ein zweiter Produktionsprozess überwacht und eingestellt werden, so wird ein zweites Produktionsschema bereitgestellt, welches Sensoren definiert und es wird definiert, wie die Produktionsmittel in Reaktion, also in Abhängigkeit der Sensorparameter eingestellt werden. Die Produktionsschemata werden abgespeichert und zur Laufzeit oder davor eingestellt. Somit liegt also eine Vielzahl von Produktionsschemata bereit, wobei jeweils eines verwendet wird.

Die voreingestellten Produktionsschemas oder Schemata veranlassen also ein Auslesen, wobei die Sensoren in der zweiten Kommunikationsinfrastruktur angeordnet sind. Somit erfolgt ein abgesichertes und schwer zu beeinträchtigendes Auslesen nur der relevanten Sensoren je Produktionsschema. Dieses Auslesen nur der ausgewählten Sensoren erfolgt mittels mindestens einer Steuereinheit, welche ebenfalls in der zweiten Kommunikationsinfrastruktur angeordnet ist. Dies verbessert wieder die Kommunikation bzgl. Kommunikationsparameter wie Latenz, Bandbreite, Verfügbarkeit und Sicherheit.

Ein vorteilhafter Aspekt der Erfindung ist also die gezielte Auswahl und Auslesung von Sensoren basierend auf einem voreingestellten Produktionsschema. Dies ermöglicht eine zielgerichtete Datenerfassung, bei der nur die relevanten Daten erfasst werden, was die Effizienz der Datensammlung erhöht und den Datenverkehr reduziert. Die Flexibilität und Anpassungsfähigkeit des Systems erlauben es, Sensoren je nach Produktionsanforderungen oder -änderungen schnell auszuwählen und anzupassen.

Es erfolgt ein Ansteuern von Produktionsmitteln innerhalb des Produktionsprozesses durch die mindestens ein Steuereinheit wodurch auf die Sensordaten reagiert wird. Diese werden derart angesprochen, dass der gewünschte Effekt gemäß Produktionsschema eintritt.

Alle Verfahrensschritte können unter Verwendung der Steuereinheit bzw. mehrerer Steuereinheiten ausgeführt werden.

Die Steuereinheit, die in der zweiten Kommunikationsinfrastruktur angeordnet ist, ermöglicht eine zentrale und effiziente Steuerung der Produktionsmittel. Dies erlaubt Echtzeit-Anpassungen basierend auf den Sensordaten und dem voreingestellten Produktionsschema, was die Reaktionsfähigkeit und Effizienz des Produktionsprozesses weiter verbessert. Die zentrale Steuerung trägt auch zur Verbesserung der Prozesssicherheit bei, indem sie sicherstellt, dass alle Aktionen auf genauen und aktuellen Daten basieren.

Durch die präzise Steuerung und Anpassung der Produktionsmittel können Produktionsprozesse optimiert werden, was zu einer höheren Produktionsleistung und - qualität führt. Insgesamt bietet das beschriebene Verfahren erhebliche Vorteile in Bezug auf Kosteneffizienz, Flexibilität, Prozesssicherheit und Produktionsleistung. Die Erfindung stellt somit einen Beitrag zur Optimierung sicherheitskritischer Produktionsprozesse dar und trägt zur Verbesserung der gesamten Produktionsinfrastruktur bei.

Somit erfolgt also in Abhängigkeit ausgelesener Sensordaten und des voreingestellten Produktionsschemas ein Anpassen des Produktionsprozesses, optional zur Laufzeit. Es gibt also eine Rückkopplung von Sensordaten einer ersten Menge überwachter Produktionsmittel zur Steuerung einer zweiten Menge von Produktionsmittel. Die Mengen verhalten sich einstellbar, diese können also disjunkt sein und einfach nur produktionstechnisch miteinander in Verbindung stehen. Diese können also auch mindestens teilüberlappend sein.

Diese Erfindung löst die Aufgabe, die Effizienz, Sicherheit und Zuverlässigkeit der Steuerung und Überwachung von Produktionsprozessen in sicherheitskritischen Umgebungen zu verbessern. Durch die Implementierung einer dualen Kommunikationsinfrastruktur, die Nutzung von Hochfrequenzsignalen über Niederspannungs-Stromleitungen, die gezielte Auswahl und Auslesung von Sensoren, die kaskadierte Kopplung von Steuereinheiten sowie die Bereitstellung von Produktionsschemata und Verschlüsselungsmechanismen werden mehrere Herausforderungen gleichzeitig adressiert.

Erstens ermöglicht die duale Kommunikationsinfrastruktur eine erhöhte Ausfallsicherheit und Redundanz, was die Kontinuität des Produktionsprozesses sicherstellt. Die Nutzung bestehender Stromleitungen für die Datenübertragung reduziert die Kosten und vereinfacht die Installation und Wartung. Zweitens erlaubt die gezielte Auswahl und Auslesung von Sensoren eine effiziente und präzise Datenerfassung, die direkt zur Optimierung der Produktionsmittel beiträgt. Die kaskadierte Kopplung der Steuereinheiten verbessert die Verarbeitungsgeschwindigkeit und Fehlertoleranz des Systems, während die Bereitstellung von Produktionsschemata durch die Steuereinheit eine konsistente und zentrale Steuerung ermöglicht. Drittens erhöht die Verschlüsselung der Datenübertragung die Sicherheit und schützt vor unbefugtem Zugriff und Cyberangriffen. Die nicht überschreibbare Kennung der Steuereinheiten stellt die Authentizität und Integrität der Geräte sicher und erleichtert deren Verwaltung und Nachverfolgbarkeit.

Insgesamt adressiert diese Erfindung die komplexen Anforderungen moderner Produktionsumgebungen, indem sie eine robuste, flexible und sichere Infrastruktur für die Steuerung und Überwachung sicherheitskritischer Produktionsprozesse bereitstellt.

Gemäß einem Aspekt der vorliegenden Erfindung weisen die erste Kommunikationsinfrastruktur und die zweite Kommunikationsinfrastruktur disjunkte oder gemeinsame Komponenten auf. Dies hat den Vorteil, dass sowohl Redundanz als auch Flexibilität in der Kommunikationsarchitektur gewährleistet werden können. Durch die Nutzung gemeinsamer Komponenten wird die Ressourcennutzung optimiert und die Kosten für zusätzliche Hardware reduziert. Gleichzeitig ermöglicht die disjunkte Anordnung eine erhöhte Ausfallsicherheit und Betriebskontinuität, da bei einem Ausfall einer Infrastruktur die andere weiterhin funktionstüchtig bleibt. Diese Kombination aus Redundanz und gemeinsamer Nutzung sorgt für eine robuste und kosteneffiziente Lösung, die den Anforderungen sicherheitskritischer Produktionsprozesse gerecht wird.

Gemäß einem weiteren Aspekt der vorliegenden Erfindung erfolgt das Modulieren von Hochfrequenzsignalen unter Verwendung der mindestens einen Steuereinheit. Dies hat den Vorteil, dass die Datenübertragung über bestehende Niederspannungs-Stromleitungen effizient und zuverlässig gestaltet werden kann. Durch die Integration der Modulation in die Steuereinheit wird die Notwendigkeit zusätzlicher spezialisierter Hardware vermieden, was die Systemkomplexität und die Kosten reduziert. Darüber hinaus ermöglicht diese zentrale Steuerung eine präzise und konsistente Signalverarbeitung, was die Qualität und Stabilität der Kommunikationsverbindungen verbessert. Dies führt zu einer robusteren und flexibleren Infrastruktur, die sich schnell an verschiedene Produktionsanforderungen anpassen lässt und die Betriebssicherheit erhöht.

Gemäß einem weiteren Aspekt der vorliegenden Erfindung sind die Sensoren kommunikativ mit der mindestens einen Steuereinheit gekoppelt. Dies hat den Vorteil, dass eine direkte und effiziente Kommunikation zwischen den Sensoren und der Steuereinheit ermöglicht wird. Durch diese direkte Kopplung können Sensordaten in Echtzeit an die Steuereinheit übermittelt und verarbeitet werden, was eine sofortige Reaktion und Anpassung der Produktionsmittel basierend auf den aktuellen Produktionsbedingungen ermöglicht. Diese Echtzeit-Kommunikation verbessert die Genauigkeit und Zuverlässigkeit der Daten, wodurch die Steuerung und Überwachung des Produktionsprozesses optimiert werden. Darüber hinaus vereinfacht die kommunikative Kopplung die Integration und Verwaltung der Sensoren im gesamten Produktionssystem, was die Flexibilität und Skalierbarkeit der Infrastruktur erhöht. Dies führt letztlich zu einer höheren Effizienz und Sicherheit in sicherheitskritischen Produktionsprozessen.

Gemäß einem weiteren Aspekt der vorliegenden Erfindung werden eine Mehrzahl von Steuereinheiten betrieben, welche derart kaskadiert kommunikativ gekoppelt sind, dass eine Mehrzahl von Steuereinheiten Sensordaten an mindestens eine weitere Steuereinheit übersenden. Dies hat den Vorteil, dass die Verarbeitung und Weiterleitung von Sensordaten dezentral und effizient organisiert werden kann. Durch die kaskadierte Kopplung der Steuereinheiten wird eine hierarchische Datenstruktur geschaffen, die eine schnellere und robustere Datenverarbeitung ermöglicht. Sensordaten können lokal von den ersten Steuereinheiten verarbeitet und nur relevante Informationen an die zentralen Steuereinheiten weitergeleitet werden. Dies reduziert die Datenlast und erhöht die Verarbeitungsgeschwindigkeit. Zudem ermöglicht diese Struktur eine bessere Fehlertoleranz und Ausfallsicherheit, da die Ausfall einer einzelnen Steuereinheit nicht das gesamte System beeinträchtigt. Die Kaskadierung erlaubt eine Lastverteilung, wodurch die Effizienz und Zuverlässigkeit des Systems gesteigert werden. Diese dezentrale Organisation unterstützt auch die Skalierbarkeit des Systems, da bei steigenden Anforderungen einfach zusätzliche Steuereinheiten in die bestehende Struktur integriert werden können. Somit wird die Flexibilität und Anpassungsfähigkeit des Produktionsprozesses erheblich verbessert, was besonders in sicherheitskritischen Umgebungen von großem Vorteil ist.

Gemäß einem weiteren Aspekt der vorliegenden Erfindung stellt mindestens eine Steuereinheit direkt oder unter Verwendung einer Schnittstelleneinheit das Produktionsschema bereit. Dies hat den Vorteil, dass das Produktionsschema zentral und einheitlich verwaltet und bereitgestellt werden kann. Durch die Bereitstellung des Produktionsschemas direkt durch die Steuereinheit oder über eine Schnittstelleneinheit wird sichergestellt, dass alle an den Produktionsprozess beteiligten Komponenten stets auf dem neuesten Stand sind und nach den gleichen Vorgaben arbeiten. Dies führt zu einer konsistenten und synchronisierten Steuerung der Produktionsmittel, wodurch Fehler und Inkonsistenzen im Produktionsablauf minimiert werden.

Ein weiterer Vorteil ist die Flexibilität und Anpassungsfähigkeit des Systems. Änderungen im Produktionsschema können schnell und effizient implementiert werden, da sie zentral verwaltet und über die Steuereinheit an alle relevanten Einheiten weitergeleitet werden. Dies ermöglicht eine schnelle Reaktion auf neue Anforderungen oder unerwartete Ereignisse im Produktionsprozess. Darüber hinaus erleichtert die zentrale Bereitstellung des Produktionsschemas die Überwachung und Optimierung des Produktionsprozesses, da die Steuereinheit in Echtzeit auf die aktuellen Produktionsbedingungen reagieren und Anpassungen vornehmen kann. Dies führt zu einer erhöhten Effizienz, Produktivität und Sicherheit im gesamten Produktionsprozess.

Gemäß einem weiteren Aspekt der vorliegenden Erfindung stellt das Produktionsschema Sensordaten auf Instruktionen zum Ansteuern der Produktionsmittel bereit. Dies hat den Vorteil, dass die Sensordaten unmittelbar und automatisch in konkrete Handlungsanweisungen für die Produktionsmittel umgesetzt werden können. Durch diese direkte Transformation von Sensordaten in Steuerungsbefehle wird die Effizienz des Produktionsprozesses erheblich gesteigert, da zeitaufwendige manuelle Eingriffe und Interpretationen der Daten entfallen. Ein weiterer Vorteil ist die Erhöhung der Genauigkeit und Reaktionsgeschwindigkeit. Da die Sensordaten in Echtzeit verarbeitet und in Instruktionen umgesetzt werden, können die Produktionsmittel sofort auf veränderte Bedingungen oder aufkommende Probleme reagieren. Dies verbessert die Flexibilität und Anpassungsfähigkeit des Produktionssystems erheblich. Zudem wird die Prozesssicherheit erhöht, da das Risiko menschlicher Fehler minimiert wird und alle Aktionen auf präzisen, aktuellen Daten basieren. Darüber hinaus trägt diese automatische Umsetzung der Sensordaten zur Optimierung der Produktionsprozesse bei. Produktionsmittel können präziser gesteuert und überwacht werden, was zu einer besseren Ressourcennutzung, geringeren Ausfallzeiten und höherer Produktqualität führt. Insgesamt ermöglicht die direkte Bereitstellung von Instruktionen auf Basis der Sensordaten eine dynamische und effiziente Steuerung des Produktionsprozesses, was zu einer höheren Effizienz, Zuverlässigkeit und Produktivität führt.

Gemäß einem weiteren Aspekt der vorliegenden Erfindung weist die zweite Kommunikationsinfrastruktur eine Luftschnittstelle und/oder eine kabelgebundene Schnittstelle auf. Dies hat den Vorteil, dass eine hohe Flexibilität und Anpassungsfähigkeit in der Datenübertragung erreicht werden kann. Durch die Integration beider Schnittstellenarten können je nach Anforderung und Umgebungsbedingungen die jeweils optimalen Kommunikationswege genutzt werden. Eine Luftschnittstelle ermöglicht drahtlose Kommunikation, die besonders in dynamischen oder schwer zugänglichen Bereichen von Vorteil ist. Dies reduziert den Verkabelungsaufwand und erleichtert die Installation und Wartung, insbesondere in komplexen oder weitläufigen Produktionsumgebungen. Drahtlose Schnittstellen bieten zudem Mobilität und erleichtern die Integration von mobilen oder beweglichen Komponenten innerhalb des Produktionsprozesses. Gleichzeitig bietet die kabelgebundene Schnittstelle eine stabile und zuverlässige Kommunikationsverbindung, die weniger anfällig für Störungen und Interferenzen ist. Dies ist besonders wichtig in sicherheitskritischen Anwendungen, bei denen eine kontinuierliche und sichere Datenübertragung gewährleistet sein muss. Kabelgebundene Verbindungen bieten zudem eine höhere Bandbreite, was die Übertragung großer Datenmengen erleichtert und die Gesamteffizienz des Systems steigert. Die Kombination beider Schnittstellenarten innerhalb der zweiten Kommunikationsinfrastruktur maximiert somit die Flexibilität, Zuverlässigkeit und Effizienz der Datenübertragung. Dies ermöglicht eine optimale Anpassung an unterschiedliche Anforderungen und Betriebsbedingungen, was zu einer verbesserten Gesamtleistung des Produktionsprozesses führt. Darüber hinaus erhöht die Vielseitigkeit der Kommunikationsinfrastruktur die Ausfallsicherheit und Betriebsstabilität, indem alternative Kommunikationswege zur Verfügung stehen, falls eine Schnittstelle ausfallen sollte.

Gemäß einem weiteren Aspekt der vorliegenden Erfindung sind die Sensoren innerhalb eines Produktionsprozesses derart eingebracht, dass diese Parameter der Produktionsmittel überwachen. Dies hat den Vorteil, dass eine kontinuierliche und präzise Überwachung der Produktionsmittel gewährleistet wird. Durch die direkte Einbindung der Sensoren in den Produktionsprozess können relevante Parameter wie Temperatur, Druck, Geschwindigkeit, und andere betriebsrelevante Größen in Echtzeit erfasst werden. Diese kontinuierliche Überwachung ermöglicht es, Abweichungen und potenzielle Probleme frühzeitig zu erkennen, bevor sie zu größeren Störungen oder Ausfällen führen. Dadurch können proaktive Maßnahmen ergriffen werden, um die Effizienz und Verfügbarkeit der Produktionsmittel zu maximieren. Zudem trägt die Echtzeitüberwachung zur Optimierung des Produktionsprozesses bei, indem sie die Grundlage für datenbasierte Entscheidungen und Anpassungen bietet. Ein weiterer Vorteil ist die Verbesserung der Prozesssicherheit.

Durch die ständige Überwachung und das sofortige Feedback können Sicherheitsrisiken minimiert werden. Dies ist besonders wichtig in sicherheitskritischen Produktionsprozessen, wo jede Abweichung von den normalen Betriebsbedingungen erhebliche Konsequenzen haben kann.

Darüber hinaus ermöglicht die Überwachung der Produktionsmittel eine präzise Steuerung und Feinabstimmung des Produktionsprozesses. Sensordaten können genutzt werden, um die Betriebsparameter der Maschinen und Anlagen optimal anzupassen, was zu einer höheren Produktqualität und einer effizienteren Ressourcennutzung führt. Insgesamt trägt die Überwachung der Produktionsparameter durch Sensoren wesentlich zur Erhöhung der Produktivität, Zuverlässigkeit und Sicherheit des Produktionsprozesses bei.

Gemäß einem weiteren Aspekt der vorliegenden Erfindung liegen die Sensoren als eine Lichtschranke, bildgebende Sensoren, Temperaturfühler und/oder physikalische Sensoren vor. Dies hat den Vorteil, dass eine breite Palette von Parametern und Bedingungen innerhalb des Produktionsprozesses überwacht und erfasst werden kann. Durch die Verwendung von Lichtschranken können präzise Positionierungen und Bewegungen von Produktionsmitteln und Materialien überwacht werden, was besonders wichtig für die Automatisierung und Steuerung von Produktionsabläufen ist. Bildgebende Sensoren ermöglichen eine visuelle Überwachung und Qualitätskontrolle, indem sie Bilder oder Videos von Produktionsprozessen in Echtzeit liefern. Dies ist nützlich für die Erkennung von Fehlern oder Anomalien, die sonst möglicherweise unbemerkt bleiben würden. Temperaturfühler bieten die Möglichkeit, die Temperatur von Maschinen, Materialien und Prozessen kontinuierlich zu überwachen. Dies ist entscheidend für die Aufrechterhaltung optimaler Betriebsbedingungen und zur Vermeidung von Überhitzung oder anderen thermischen Problemen, die die Qualität der Produkte beeinträchtigen oder die Sicherheit gefährden könnten. Physikalische Sensoren, wie Drucksensoren oder Vibrationssensoren, können weitere wichtige Parameter erfassen, die auf den Zustand und die Leistung der Produktionsmittel hinweisen. Die Kombination dieser verschiedenen Sensortypen ermöglicht eine umfassende und detaillierte Überwachung des gesamten Produktionsprozesses. Dies führt zu einer verbesserten Kontrolle und Steuerung, da die Daten aus verschiedenen Quellen zusammengeführt und analysiert werden können, um ein vollständiges Bild der Betriebsbedingungen zu erhalten. Dadurch können proaktive und gezielte Maßnahmen zur Optimierung und Fehlersuche ergriffen werden, was die Effizienz, Qualität und Sicherheit des Produktionsprozesses erheblich steigert.

Gemäß einem weiteren Aspekt der vorliegenden Erfindung umfasst das Modulieren ein Verschlüsseln. Dies hat den Vorteil, dass die Sicherheit der Datenübertragung erheblich verbessert wird. Durch die Verschlüsselung der Hochfrequenzsignale wird sichergestellt, dass die übertragenen Daten vor unbefugtem Zugriff und Manipulation geschützt sind. Dies ist besonders wichtig in sicherheitskritischen Produktionsprozessen, bei denen sensible Informationen und Steuerungsbefehle über die Kommunikationsinfrastruktur gesendet werden. Ein weiterer Vorteil der Verschlüsselung ist der Schutz vor Cyberangriffen. In modernen Produktionsumgebungen, die zunehmend vernetzt und digitalisiert sind, stellt die IT-Sicherheit eine zentrale Herausforderung dar. Die Verschlüsselung der Kommunikationssignale verhindert, dass Angreifer die Daten abfangen und nutzen können, um den Produktionsprozess zu stören oder zu sabotieren. Dies trägt maßgeblich zur Betriebssicherheit und zur Kontinuität des Produktionsprozesses bei. Darüber hinaus gewährleistet die Verschlüsselung die Integrität der Daten. Indem die Daten während der Übertragung verschlüsselt werden, kann sichergestellt werden, dass sie unverändert und korrekt bei der empfangenden Steuereinheit ankommen. Dies ist entscheidend für die zuverlässige Steuerung und Überwachung der Produktionsmittel, da falsche oder manipulierte Daten zu Fehlfunktionen und Produktionsausfällen führen können. Zusammenfassend bietet die Integration der Verschlüsselung in den Modulationsprozess eine robuste Sicherheitsmaßnahme, die sowohl den Schutz sensibler Daten als auch die Integrität und Zuverlässigkeit der Datenübertragung gewährleistet. Dies führt zu einer erhöhten Gesamtstabilität und Sicherheit des Produktionsprozesses, was in sicherheitskritischen Umgebungen von größter Bedeutung ist.

Gemäß einem weiteren Aspekt der vorliegenden Erfindung wird die mindestens eine Steuereinheit mit einer nicht überschreibbaren Kennung ausgestattet. Dies hat den Vorteil, dass die Authentizität und Integrität der Steuereinheit jederzeit sichergestellt werden können. Eine nicht überschreibbare Kennung stellt sicher, dass jede Steuereinheit eindeutig identifizierbar ist und ihre Identität nicht manipuliert oder gefälscht werden kann. Ein wesentlicher Vorteil dieser Sicherheitsmaßnahme ist der Schutz vor unautorisiertem Zugriff und Manipulation. In sicherheitskritischen Produktionsprozessen ist es entscheidend, dass nur autorisierte und vertrauenswürdige Geräte Zugriff auf das Steuerungssystem haben. Durch die nicht überschreibbare Kennung wird verhindert, dass potenzielle Angreifer gefälschte oder kompromittierte Steuereinheiten in das System einschleusen können. Dies erhöht die Sicherheit des gesamten Produktionsnetzwerks erheblich.

Darüber hinaus erleichtert die eindeutige Kennung die Nachverfolgbarkeit und Wartung der Steuereinheiten. Jede Einheit kann eindeutig identifiziert und ihrem Einsatzort sowie ihrer Funktion innerhalb des Produktionsprozesses zugeordnet werden. Dies vereinfacht die Verwaltung und Überwachung der Geräte, insbesondere in großen und komplexen Produktionsumgebungen. Bei Wartungsarbeiten oder im Falle eines Ausfalls kann schnell und präzise festgestellt werden, welche Steuereinheit betroffen ist, was die Effizienz und Reaktionszeit verbessert.

Die nicht überschreibbare Kennung trägt auch zur Einhaltung von Sicherheits- und Compliance-Richtlinien bei. In vielen Industrien gibt es strenge Vorschriften und Standards, die die Sicherheit und Integrität von Produktionssystemen gewährleisten sollen. Durch die Implementierung dieser Kennungen können Unternehmen sicherstellen, dass sie diesen Anforderungen entsprechen und somit das Risiko von Sicherheitsverletzungen und rechtlichen Konsequenzen minimieren.

Zusammenfassend bietet die Ausstattung der Steuereinheiten mit einer nicht überschreibbaren Kennung eine robuste Sicherheitsmaßnahme, die sowohl die Integrität und Authentizität der Geräte als auch die Effizienz und Nachverfolgbarkeit innerhalb des Produktionsprozesses gewährleistet. Dies führt zu einer höheren Sicherheit, Zuverlässigkeit und Compliance in sicherheitskritischen Produktionsumgebungen.

Die vorliegende Erfindung adressiert die Nachteile im Stand der Technik durch die Implementierung einer dualen Kommunikationsinfrastruktur, die sowohl aus einer ersten Kommunikationsinfrastruktur als auch aus einer zweiten besteht, die Hochfrequenzsignale über Niederspannungs-Stromleitungen moduliert. Diese innovative Nutzung bestehender Stromleitungen reduziert die Notwendigkeit für separate Kommunikationskabel und senkt somit die Installations- und Wartungskosten. Die Verwendung von Hochfrequenzsignalen über Stromleitungen bietet eine kostengünstige und flexible Lösung für die Datenübertragung und erhöht die Ausfallsicherheit, da die zweite Kommunikationsinfrastruktur als redundanter Kommunikationsweg fungieren kann.

Ein weiterer Vorteil der Erfindung ist die dezentrale und kaskadierte Verarbeitung der Sensordaten durch mehrere Steuereinheiten, die miteinander gekoppelt sind. Diese Anordnung ermöglicht eine schnellere und effizientere Verarbeitung der Daten und eine unmittelbare Reaktion auf Veränderungen im Produktionsprozess. Durch die direkte Überwachung der Produktionsparameter und die Echtzeit-Umsetzung der Sensordaten in Steuerungsbefehle werden die Effizienz und Reaktionsfähigkeit des Systems erheblich verbessert.

Die Erfindung erhöht auch die Sicherheit der Datenübertragung durch die Integration von Verschlüsselungsmechanismen in die Modulation der Signale. Dies schützt die Daten vor unbefugtem Zugriff und Manipulation, was besonders in sicherheitskritischen Produktionsumgebungen von großer Bedeutung ist. Die Ausstattung der Steuereinheiten mit nicht überschreibbaren Kennungen stellt zudem die Authentizität und Integrität der Geräte sicher und erleichtert deren Verwaltung und Nachverfolgbarkeit.

Die Aufgabe wird auch gelöst durch eine Systemanordnung zum effizienten Ansteuern von Endgeräten innerhalb eines sicherheitskritischen Produktionsprozesses, aufweisend mindestens eine Netzwerkeinheit eingerichtet zum Betreiben einer ersten Kommunikationsinfrastruktur und einer zweiten Kommunikationsinfrastruktur, wobei die zweite Kommunikationsinfrastruktur mindestens einen Kommunikationspfad mittels eines Modulierens von Hochfrequenzsignalen über eine Niederspannungs-Stromleitungen betreibt; mindestens einer Steuereinheit eingerichtet zum Auswählen von Sensoren aus einer Menge von Sensoren innerhalb des Produktionsprozesses in Abhängigkeit eines voreingestellten Produktionsschemas, wobei die Sensoren in der zweiten Kommunikationsinfrastruktur angeordnet sind; die mindestens eine Steuereinheit eingerichtet zum Auslesen nur der ausgewählten Sensoren mittels mindestens der Steuereinheit, welche ebenfalls in der zweiten Kommunikationsinfrastruktur angeordnet ist; und zum Ansteuern von Produktionsmitteln innerhalb des Produktionsprozesses durch die mindestens eine Steuereinheit in Abhängigkeit ausgelesener Sensordaten und des voreingestellten Produktionsschemas.

Die Erfindung umfasst mehrere Hardware-Merkmale, die zusammen eine robuste und effiziente Infrastruktur für die Steuerung und Überwachung sicherheitskritischer Produktionsprozesse bilden. Ein Merkmal ist die duale Kommunikationsinfrastruktur, bestehend aus einer ersten und einer zweiten Kommunikationsinfrastruktur. Die zweite Infrastruktur verwendet Hochfrequenzsignale, die über Niederspannungs-Stromleitungen moduliert werden, was eine kostengünstige und flexible Datenübertragung ohne den Bedarf an separaten Kommunikationskabeln ermöglicht. Ein Stromnetz in einer Produktionsanlage ist ein komplexes technisches System, das darauf abzielt, die elektrische Energie effizient und sicher zu verteilen, um die verschiedenen Maschinen und Produktionsprozesse zu betreiben. Es beginnt in der Regel mit der Anbindung an das öffentliche Versorgungsnetz, wobei der Strom zunächst in einem Transformatorhaus ankommt, der den Hochspannungsstrom in eine für die Produktionsanlage geeignete Mittelspannung umwandelt.

Innerhalb der Produktionsbereiche wird der Strom durch ein Netz von Kabeltrassen und Leitungen zu den einzelnen Maschinen und Anlagen geführt. Diese Kabel sind oft in Kabelkanälen oder unter dem Boden verlegt, um eine sichere und störungsfreie Stromversorgung zu gewährleisten. Größere Maschinen und Produktionsanlagen haben meist eigene Schaltschränke, die nicht nur die Stromversorgung regeln, sondern auch Steuerungseinrichtungen enthalten, die den Betrieb der Maschinen automatisieren. Zusätzlich zur Notstromversorgung ist die Erdung ein wesentlicher Aspekt des Stromnetzes in einer Produktionsanlage. Alle elektrischen Systeme und Metallstrukturen sind geerdet, um das Risiko von elektrischen Schlägen zu minimieren und Überspannungen sicher abzuleiten. Insgesamt stellt das Stromnetz in einer Produktionsanlage ein hochentwickeltes und integriertes System dar, das die kontinuierliche und sichere Bereitstellung elektrischer Energie sicherstellt, die für die vielfältigen und anspruchsvollen Produktionsprozesse erforderlich ist.

Erfindungsgemäß kann in der zweiten Kommunikationsinfrastruktur zum Beispiel DLAN verwendet werden. Technisch gesehen basiert DLAN auf der Modulation von Hochfrequenzsignalen über die Niederspannungs-Stromleitungen. Diese Signale sind so konzipiert, dass sie nicht mit dem normalen Wechselstrom, der zur Stromversorgung von Geräten verwendet wird, interferieren. Ein DLAN-Adapter wird in eine Steckdose gesteckt und über ein Ethernet-Kabel mit dem Router verbunden. Ein zweiter Adapter, der ebenfalls in eine Steckdose gesteckt wird, kann dann ein anderes Gerät, wie einen Computer, mit dem Netzwerk verbinden.

Die Übertragungsgeschwindigkeit von DLAN kann variieren, je nach den verwendeten Geräten und der Qualität der Stromleitungen. Moderne DLAN-Adapter unterstützen in der Regel Geschwindigkeiten von bis zu mehreren hundert Megabit pro Sekunde, wobei einige Modelle sogar Gigabit-Geschwindigkeiten erreichen können. Die tatsächliche Leistung hängt jedoch stark von den spezifischen Bedingungen im jeweiligen Stromnetz ab, wie der Länge der Stromleitungen, der Anzahl der angeschlossenen Geräte und möglichen Störquellen.

Ein weiterer technischer Aspekt von DLAN ist die Verschlüsselung. Um die Sicherheit der Datenübertragung zu gewährleisten, nutzen DLAN-Adapter in der Regel eine 128-Bit-AES-Verschlüsselung. Dies stellt sicher, dass die übertragenen Daten vor unbefugtem Zugriff geschützt sind. DLAN-Systeme sind erfindungsgemäß mit Quality of Service (QoS)-Funktionen ausgestattet, die den Datenverkehr priorisieren und so eine stabile Verbindung für Anwendungen wie Video-Streaming oder Online-Gaming gewährleisten. Die Installation von DLAN ist unkompliziert, da es in der Regel keine aufwendigen Konfigurationen erfordert. Man steckt die Adapter ein, verbindet die Geräte, und das Netzwerk ist betriebsbereit.

Innerhalb des Produktionsprozesses sind Sensoren strategisch platziert, um verschiedene Parameter zu überwachen. Diese Sensoren umfassen Lichtschranken zur Überwachung von Position und Bewegung von Objekten, bildgebende Sensoren zur visuellen Überwachung und Qualitätskontrolle, Temperaturfühler zur kontinuierlichen Überwachung der Temperatur von Maschinen und Materialien sowie physikalische Sensoren wie Druck- und Vibrationssensoren, die weitere betriebsrelevante Größen erfassen. Diese Sensoren sind in der zweiten Kommunikationsinfrastruktur angeordnet und werden basierend auf einem voreingestellten Produktionsschema ausgewählt und ausgelesen.

Ein weiteres Hardware-Merkmal sind die Modulatoren, die in die Steuereinheiten integriert sind und die Modulation der Hochfrequenzsignale über die Niederspannungs-Stromleitungen ermöglichen. Diese Modulatoren enthalten auch Verschlüsselungseinheiten, die sicherstellen, dass die übertragenen Daten vor unbefugtem Zugriff und Manipulation geschützt sind, um die Integrität und Vertraulichkeit der Daten zu gewährleisten.

Zusätzlich sind die Steuereinheiten mit Schnittstelleneinheiten ausgestattet, die es ermöglichen, das Produktionsschema bereitzustellen. Diese Schnittstellen können sowohl drahtlos als auch kabelgebunden sein, was die Flexibilität und Anpassungsfähigkeit der Systemanordnung erhöht. Durch die Integration dieser Hardware-Komponenten bietet die Erfindung eine umfassende, flexible und sichere Lösung für die Steuerung und Überwachung sicherheitskritischer Produktionsprozesse. Die Kombination aus dualer Kommunikationsinfrastruktur, präzisen Sensoren, leistungsfähigen Steuereinheiten und robusten Sicherheitsmechanismen stellt sicher, dass die Produktionsprozesse effizient, zuverlässig und sicher ablaufen.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens zum effizienten Ansteuern von Endgeräten gemäß einem Aspekt der vorliegenden Erfindung;
- Figur 2:: ein schematisches Architekturdiagramm der vorgeschlagenen Systemanordnung zum effizienten Ansteuern von Endgeräten gemäß einem Aspekt der vorliegenden Erfindung;
- Figur 3:: ein weiteres schematisches Architekturdiagramm der vorgeschlagenen Systemanordnung zum effizienten Ansteuern von Endgeräten gemäß einem weiteren Aspekt der vorliegenden Erfindung;
- Figur 4:: ein schematisches Blockdiagramm der vorgeschlagenen Systemanordnung zum effizienten Ansteuern von Endgeräten gemäß einem weiteren Aspekt der vorliegenden Erfindung;
- Figur 5:: ein weiteres schematisches Architekturdiagramm der vorgeschlagenen Systemanordnung zum effizienten Ansteuern von Endgeräten gemäß einem weiteren Aspekt der vorliegenden Erfindung; und
- Figur 6:: ein schematisches Blockdiagramm der vorgeschlagenen Systemanordnung zum effizienten Ansteuern von Endgeräten gemäß einem weiteren Aspekt der vorliegenden Erfindung.

Die vorliegenden Figuren weisen teilweise Parameter auf, welche dem Fachmann in der englischen Bezeichnung so geläufig sind und welche als Parameter verwendet werden und so nicht zu übersetzen sind.

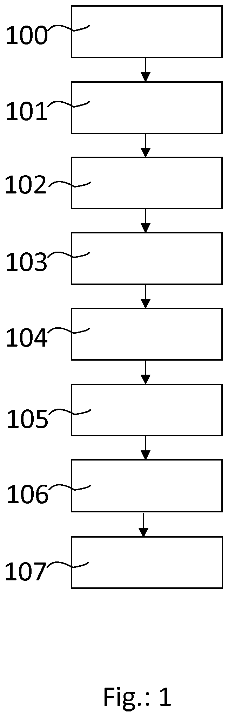

Figur 1 zeigt in einem schematischen Ablaufdiagramm ein Verfahren zum effizienten Ansteuern von Endgeräten innerhalb eines sicherheitskritischen Produktionsprozesses, aufweisend ein Betreiben 100 einer ersten Kommunikationsinfrastruktur und einer zweiten Kommunikationsinfrastruktur 101, wobei die zweite Kommunikationsinfrastruktur mindestens einen Kommunikationspfad mittels eines Modulierens 102 von Hochfrequenzsignalen über eine Niederspannungs-Stromleitung betreibt 103; ein Auswählen 105 von Sensoren aus einer Menge von Sensoren innerhalb des Produktionsprozesses in Abhängigkeit eines voreingestellten 104 Produktionsschemas, wobei die Sensoren in der zweiten Kommunikationsinfrastruktur angeordnet sind; ein Auslesen 106 nur der ausgewählten 105 Sensoren mittels mindestens einer Steuereinheit, welche ebenfalls in der zweiten Kommunikationsinfrastruktur angeordnet ist; und ein Ansteuern 107 von Produktionsmitteln innerhalb des Produktionsprozesses durch die mindestens ein Steuereinheit in Abhängigkeit ausgelesener 106 Sensordaten und des voreingestellten Produktionsschemas.

Im Folgenden wird die erfindungsgemäße Systemanordnung bzw. das Verfahren als OpenBl Platform oder OpenBI Platform bezeichnet.

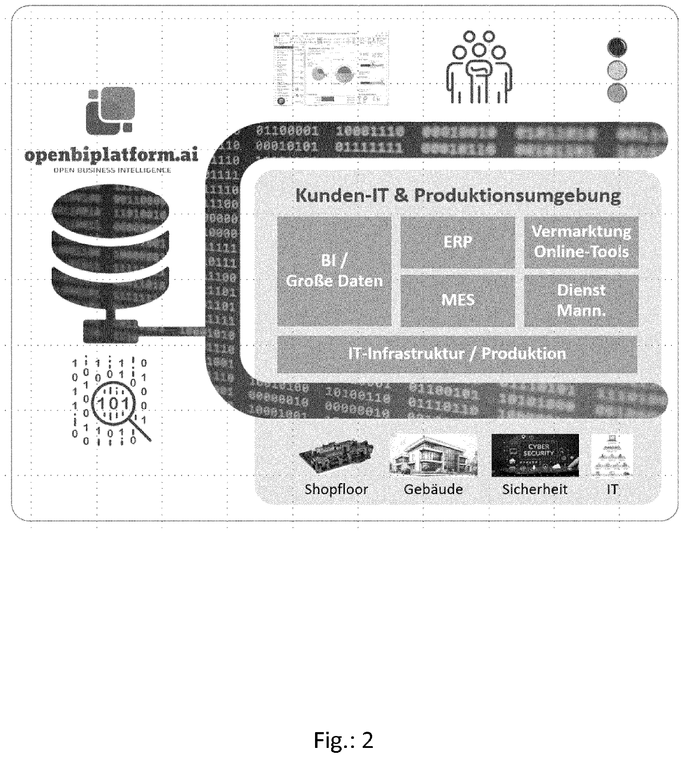

Figur 2 zeigt die mögliche Architektur, welche erfindungsgemäß implementiert werden kann. Das Diagramm zeigt die Integration der Open Business Intelligence Plattform (OpenBiPlatform.ai) in eine Kunden-IT- und Produktionsumgebung. In der Mitte des Diagramms steht die OpenBiPlatform.ai, die als zentrale Datenbank fungiert und Daten aus verschiedenen Unternehmensbereichen sammelt und speichert. Diese Plattform ist über eine symbolische Datenleitung, dargestellt durch eine Schleife aus Binärcode, mit verschiedenen Komponenten der Kunden-IT und Produktionsumgebung verbunden.

In der oberen Hälfte des Diagramms werden verschiedene Geschäftsfunktionen und Software-Systeme dargestellt, die in die OpenBiPlatform.ai integriert sind. Dazu gehören Business Intelligence und große Datenmengen, die analysiert und verarbeitet werden, Enterprise Resource Planning Systeme zur Verwaltung und Integration der Geschäftsprozesse, Manufacturing Execution Systems zur Überwachung und Steuerung der Produktionsprozesse sowie Werkzeuge zur Online-Vermarktung und Dienstleistungen und Management-Funktionen. Die zugrunde liegende IT-Infrastruktur und Produktionssysteme, die das Rückgrat der Unternehmens-IT bilden, sind ebenfalls integriert.

Diese Komponenten sind innerhalb eines Rahmens zusammengefasst, der als "Kunden-IT & Produktionsumgebung" bezeichnet wird. Im unteren Bereich des Diagramms werden spezifische Anwendungsbereiche dargestellt, darunter der Produktionsbereich (Shopfloor), die physische Infrastruktur und Gebäudemanagement-Systeme, Sicherheitsmaßnahmen sowohl physischer als auch Cyber-Sicherheitssysteme sowie die allgemeine IT-Infrastruktur des Unternehmens.

Das Diagramm verdeutlicht, dass die Plattform Daten für verschiedene Zwecke sammelt und verarbeitet, wie die Echtzeitüberwachung, Berichterstattung und Entscheidungsfindung. Zusammengefasst zeigt das Diagramm, wie die OpenBiPlatform.ai als zentrale Schnittstelle dient, die verschiedene Systeme und Datenquellen innerhalb einer Unternehmens-IT- und Produktionsumgebung integriert, um eine umfassende Überwachung, Analyse und Steuerung der Geschäftsprozesse zu ermöglichen.

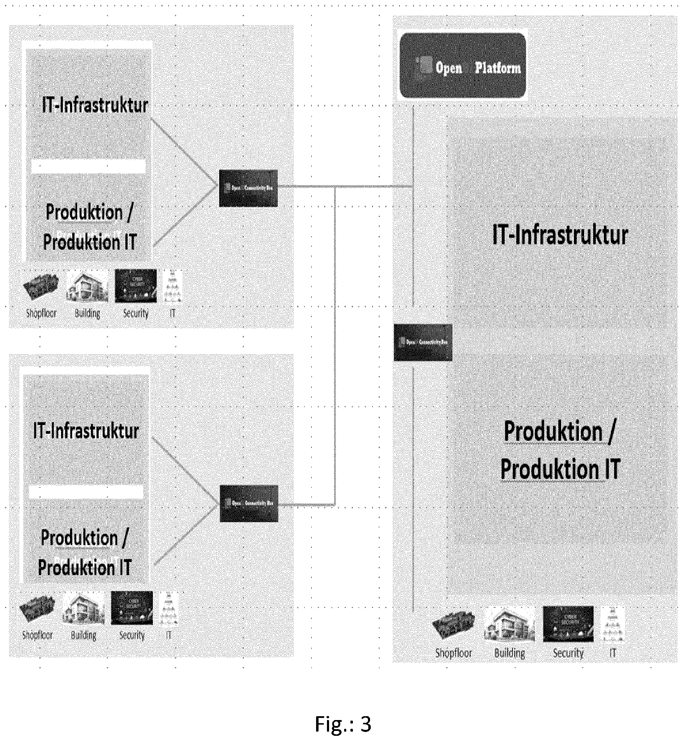

Figur 3 zeigt eine alternative bzw. additive Architektur die erfindungsgemäß implementiert werden kann. Das Diagramm illustriert die Integration der OpenBl Platform in verschiedene IT- und Produktionsumgebungen eines Unternehmens. Im Zentrum des Diagramms befindet sich die OpenBl Platform, die als zentrale Einheit fungiert und verschiedene IT-Infrastrukturen sowie Produktions- und Produktions-IT-Bereiche miteinander vernetzt.

Auf der linken Seite des Diagramms sind zwei separate IT-Umgebungen dargestellt. Jede dieser Umgebungen besteht aus einer IT-Infrastruktur und einem Bereich für Produktion und Produktions-IT. Diese Bereiche sind über Verbindungslinien mit der OpenBl Platform in der Mitte des Diagramms verbunden. Diese Verbindungen symbolisieren den Datenaustausch und die Integration der verschiedenen IT- und Produktionssysteme mit der zentralen OpenBl Platform.

Rechts von der OpenBl Platform befindet sich ein weiterer IT-Bereich, der ebenfalls eine IT-Infrastruktur und einen Bereich für Produktion und Produktions-IT umfasst. Auch dieser Bereich ist über Verbindungslinien mit der OpenBI Platform verbunden, was die zentrale Rolle der Plattform bei der Vernetzung und Integration der verschiedenen IT- und Produktionssysteme unterstreicht.

Am unteren Rand des Diagramms werden spezifische Anwendungsbereiche wie Shopfloor, Gebäude, Sicherheit und IT dargestellt, die durch die OpenBl Platform überwacht und gesteuert werden. Diese Bereiche repräsentieren verschiedene Aspekte der Unternehmensinfrastruktur, die in das zentrale System integriert sind.

Insgesamt zeigt das Diagramm, wie die OpenBl Platform als zentrale Schnittstelle fungiert, die verschiedene IT-Infrastrukturen und Produktionssysteme eines Unternehmens vernetzt. Durch diese Integration ermöglicht die Plattform eine effiziente Überwachung, Steuerung und Analyse der Daten aus unterschiedlichen Unternehmensbereichen, was zu einer verbesserten Koordination und Optimierung der Geschäftsprozesse führt.

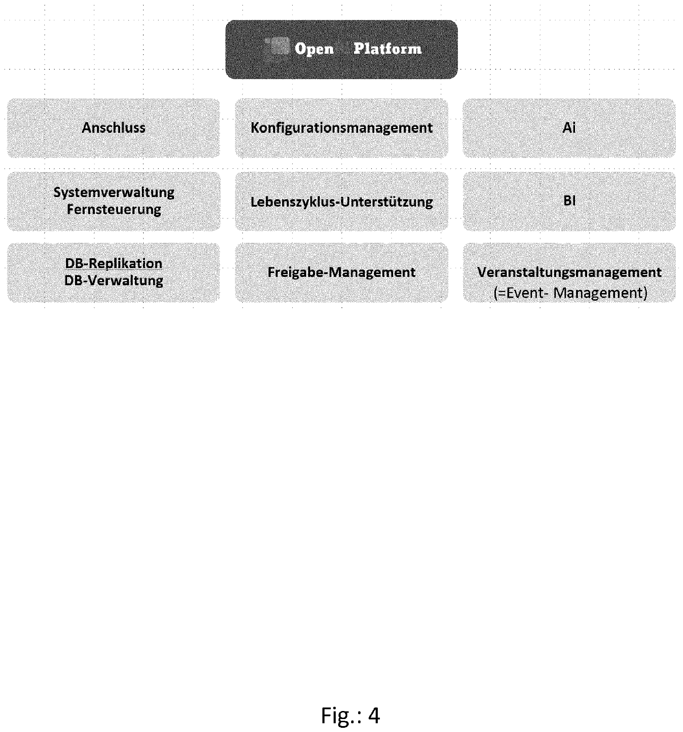

Figur 4 zeigt Komponenten, welche Erfindungsgemäß verwendet werden können. Die einzelnen Komponenten können als Softwarekomponenten oder strukturelle Komponenten der vorgeschlagenen Systemanordnung implementiert werden.

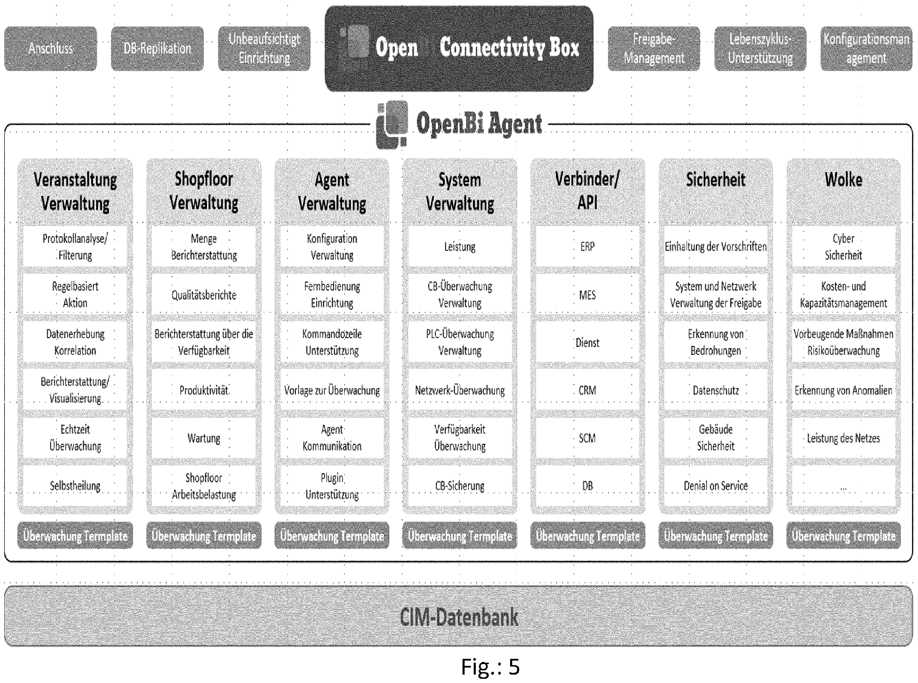

Figur 5 zeigt Komponenten, welche Erfindungsgemäß verwendet werden können. Die Abkürzungen sind bekannt und werden an dieser Stelle nicht mehr aufgeführt, was auch für die anderen Figuren gilt.

Das Diagramm zeigt die verschiedenen Funktionen und Komponenten der OpenBl Platform, die als zentrale Einheit dargestellt wird. Unterhalb der OpenBl Platform sind mehrere funktionale Bereiche in einer Matrixanordnung dargestellt. Diese Bereiche umfassen wichtige Funktionen, die von der Plattform unterstützt werden. Der erste Bereich ist der Anschluss, der die grundlegende Verbindung und Integration der verschiedenen Systeme und Datenquellen ermöglicht. Das Konfigurationsmanagement bezieht sich auf die Verwaltung und Anpassung der Systemkonfigurationen, um eine optimale Leistung und Anpassungsfähigkeit zu gewährleisten. Der Bereich Künstliche Intelligenz (KI) zeigt, dass die Plattform intelligente Algorithmen und Analysen zur Verbesserung der Datenverarbeitung und Entscheidungsfindung nutzt. Die Systemverwaltung und Fernsteuerung ermöglichen die zentrale Verwaltung und Kontrolle der IT-Systeme und Produktionsumgebungen aus der Ferne. Die Lebenszyklus-Unterstützung umfasst die Wartung und Aktualisierung der Systeme während ihres gesamten Lebenszyklus. Der Bereich Business Intelligence (BI) zeigt die Fähigkeit der Plattform, umfassende Datenanalysen und Berichterstattungen durchzuführen, um geschäftliche Einblicke zu gewinnen. Die Datenbankreplikation und Datenbankverwaltung stellen sicher, dass Daten sicher und effizient gespeichert, synchronisiert und verwaltet werden. Das Freigabe-Management ermöglicht die Verwaltung von Zugriffsrechten und Berechtigungen, um die Sicherheit und Integrität der Daten zu gewährleisten. Schließlich umfasst das Veranstaltungsmanagement die Organisation und Verwaltung von Ereignissen und Aktivitäten, die innerhalb der Plattform und der integrierten Systeme stattfinden.

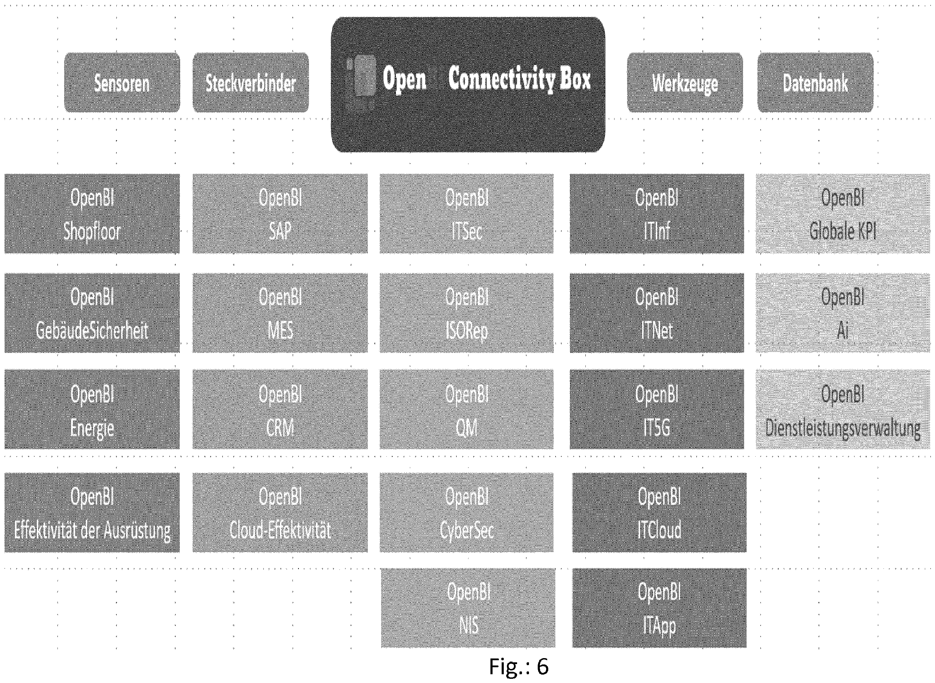

Figur 6 zeigt verwendete Komponenten und Schnittstellen des vorgeschlagenen Verfahrens bzw. der Systemanordnung. Als Teil der Lösung wird eine intelligente Infrastruktur installiert, um alle erforderlichen KPls für die weitere Optimierung und Automatisierung der Geschäftsprozesse zu überwachen. Ein einfach zu bedienendes Cockpit ermöglicht es dem Managementteam bzw. Softwareagenten, einen besseren Überblick über die Schlüsselprozesse des Unternehmens zu bekommen und präzise Entscheidungen zu treffen. Entscheidungen können schneller und unabhängig vom Standort getroffen werden. Die Lösung ist unabhängig von allen Änderungen innerhalb der IT-Infrastruktur und der Produktion. Die Lösung kann einfach installiert werden und kann ohne Auswirkungen auf laufende Prozesse deinstalliert werden.

Die Einzigartigkeit des IT-Systems liegt in seiner Fähigkeit, geschäftskritische Prozesse und Daten des gesamten Unternehmens zu erfassen und zu überwachen. Das System ist benutzerfreundlich, da es sich selbst installieren und aktualisieren kann und fernsteuerbar konfigurierbar ist, was es zur sogenannten "Blackbox" macht. Es erfasst und überwacht sowohl Hardware- als auch Software-Daten, einschließlich Ereignissen, Protokollen und Zuständen.

Die Konnektivität des Systems ermöglicht Verbindungen zu Hardware-Sensoren, Aktoren, Software-APIs, Protokolldateien, Dateisystemen, Plugins und Netzwerken. Es überwacht verschiedene Bereiche wie IT, Energie, Produktion, Gebäude, Klima und Sicherheit, einschließlich IT-Sicherheit, Cyber-Sicherheit und physische Sicherheit, sowie Mitarbeiter, Vertrieb, Marketing und Vorschriften. Das System ist erweiterbar, was bedeutet, dass benutzerdefinierte Plugins hinzugefügt werden können, um die Konnektivität zu verbessern. Es bietet Daten für die globale KPI-Berichterstattung, Geschäftsplanung, Berichterstattung, Unternehmensverfügbarkeit, Risikomanagement, Sicherheit, Qualität und Leistung. Mithilfe von Kl filtert und korreliert es die Daten, um die wichtigsten und wertvollsten Informationen zu extrahieren.

Die Daten werden nahezu in Echtzeit verarbeitet, und basierend auf den empfangenen Daten können automatisch Aktionen, wie API-Aufrufe, ausgeführt werden. Das System kann mit begrenztem oder ohne Zugang zum Netzwerk des Kunden arbeiten und bietet schreibgeschützten Zugang zu bereits installierten IT-Systemen. Es vermeidet große Datenansammlungen (Big Data) durch die Einschränkung des Zugriffs auf alle für die Berichterstattung erforderlichen Informationen. Schließlich unterstützt die Connectivity Box die Replikation von Daten bis zur OpenBiPlatform.

## Patentansprüche

1. Verfahren zum effizienten Ansteuern von Endgeräten innerhalb eines sicherheitskritischen Produktionsprozesses, aufweisend:
- ein Betreiben (100) einer ersten Kommunikationsinfrastruktur und einer zweiten Kommunikationsinfrastruktur (101), wobei die zweite Kommunikationsinfrastruktur mindestens einen Kommunikationspfad mittels eines Modulierens (102) von Hochfrequenzsignalen über eine Niederspannungs-Stromleitung betreibt (103);
- ein Auswählen (105) von Sensoren aus einer Menge von Sensoren innerhalb des Produktionsprozesses in Abhängigkeit eines voreingestellten (104) Produktionsschemas, wobei die Sensoren in der zweiten Kommunikationsinfrastruktur angeordnet sind;
- ein Auslesen (106) nur der ausgewählten (105) Sensoren mittels mindestens einer Steuereinheit, welche ebenfalls in der zweiten Kommunikationsinfrastruktur angeordnet ist; und
- ein Ansteuern (107) von Produktionsmitteln innerhalb des Produktionsprozesses durch die mindestens eine Steuereinheit in Abhängigkeit ausgelesener (106) Sensordaten und des voreingestellten Produktionsschemas.

2. Verfahren nach Anspruch 1, **dadurch gekennzeichnet, dass** die erste Kommunikationsinfrastruktur und die zweite Kommunikationsinfrastruktur disjunkte oder gemeinsame Komponenten aufweisen.

3. Verfahren nach Anspruch 1 oder 2, **dadurch gekennzeichnet, dass** das Modulieren (102) von Hochfrequenzsignalen unter Verwendung der mindestens einen Steuereinheit erfolgt.

4. Verfahren nach einem der vorhergehenden Ansprüche, **dadurch gekennzeichnet, dass** die Sensoren kommunikativ mit der mindestens einen Steuereinheit gekoppelt sind.

5. Verfahren nach einem der vorhergehenden Ansprüche, **dadurch gekennzeichnet, dass** eine Mehrzahl von Steuereinheiten betrieben werden, welche derart kaskadiert kommunikativ gekoppelt sind, dass eine Mehrzahl von Steuereinheiten Sensordaten an mindestens eine weitere Steuereinheit übersenden.

6. Verfahren nach einem der vorhergehenden Ansprüche, **dadurch gekennzeichnet, dass** mindestens eine Steuereinheit direkt oder unter Verwendung einer Schnittstelleneinheit das Produktionsschema bereitstellt.

7. Verfahren nach einem der vorhergehenden Ansprüche, **dadurch gekennzeichnet, dass** das Produktionsschema Sensordaten auf Instruktionen zum Ansteuern der Produktionsmittel bereitstellt.

8. Verfahren nach einem der vorhergehenden Ansprüche, **dadurch gekennzeichnet, dass** die zweite Kommunikationsinfrastruktur ein Luftschnittstelle und/ oder eine kabelgebundene Schnittstelle aufweist.

9. Verfahren nach einem der vorhergehenden Ansprüche, **dadurch gekennzeichnet, dass** die Sensoren innerhalb eines Produktionsprozesses derart eingebracht sind, dass diese Parameter der Produktionsmittel überwachen.

10. Verfahren nach einem der vorhergehenden Ansprüche, **dadurch gekennzeichnet, dass** die Sensoren als eine Lichtschranke, bildgebende Sensoren, Temperaturfühler, und/ oder physikalische Sensoren vorliegen.

11. Verfahren nach einem der vorhergehenden Ansprüche, **dadurch gekennzeichnet, dass** das Modulieren ein Verschlüsseln umfasst.

12. Verfahren nach einem der vorhergehenden Ansprüche, **dadurch gekennzeichnet, dass** die mindestens eine Steuereinheit mit einer nicht überschreibbaren Kennung ausgestattet wird.

13. Systemanordnung zum effizienten Ansteuern von Endgeräten innerhalb eines sicherheitskritischen Produktionsprozesses, aufweisend:
- mindestens eine Netzwerkeinheit eingerichtet zum Betreiben (100) einer ersten Kommunikationsinfrastruktur und einer zweiten Kommunikationsinfrastruktur (101), wobei die zweite Kommunikationsinfrastruktur mindestens einen Kommunikationspfad mittels eines Modulierens (102) von Hochfrequenzsignalen über eine Niederspannungs-Stromleitung betreibt (103);
- mindestens einer Steuereinheit eingerichtet zum Auswählen (105) von Sensoren aus einer Menge von Sensoren innerhalb des Produktionsprozesses in Abhängigkeit eines voreingestellten (104) Produktionsschemas, wobei die Sensoren in der zweiten Kommunikationsinfrastruktur angeordnet sind;
- die mindestens eine Steuereinheit eingerichtet zum Auslesen (106) nur der ausgewählten (105) Sensoren mittels mindestens der Steuereinheit, welche ebenfalls in der zweiten Kommunikationsinfrastruktur angeordnet ist; und
- zum Ansteuern (107) von Produktionsmitteln innerhalb des Produktionsprozesses durch die mindestens eine Steuereinheit in Abhängigkeit ausgelesener (106) Sensordaten und des voreingestellten Produktionsschemas.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
